# EUROPEAN PATENT APPLICATION

(11) **EP 4 815 008 A1**
(43) Date of publication of application: **30.09.2026**
(21) Application number: 23963167.4
(22) Date of filing: 27.12.2023
(51) Int. Cl.: H01G 4/30

(54) **MULTILAYER CERAMIC CAPACITOR**

(71) Applicant: Murata Manufacturing Co., Ltd., Nagaokakyo-shi, Kyoto 617-8555 (JP)
(72) Inventor: YANAGIHARA, Masatoshi, Nagaokakyo-shi, Kyoto 617-8555 (JP)
(74) Representative: Stöckeler, Ferdinand
(86) International application number: PCT/JP2023/047090
(87) International publication number: WO 2025/141818

(57) **Abstract**

The purpose of the present invention is to provide a multilayer ceramic capacitor in which dielectric breakdown near the side surfaces of a laminate is suppressed and high-temperature load reliability is improved. A multilayer ceramic capacitor 10 according to the present invention comprises: a laminate 12 including a plurality of laminated dielectric layers 14 and having a first side surface 12c and a second side surface 12d; a first internal electrode layer 16a; and a second internal electrode layer 16b. The plurality of dielectric layers 14 have a plurality of dielectric particles containing Ba and Ti, and the dielectric particles have a core-shell structure comprising a core portion and a shell portion surrounding the core portion, wherein the cross-sectional area of the core portion of the dielectric particles when viewed in the length direction of the laminate 12 decreases toward each of the first side surface 12c and the second side surface 12d along the width direction of the laminate 12, and the cross-sectional area of the shell portion of the dielectric particles when viewed in the length direction of the laminate 12 increases toward each of the first side surface 12c and the second side surface 12d along the width direction of the dielectric.

## Description

### TECHNICAL FIELD

The present invention relates to a multilayer ceramic capacitor.

### BACKGROUND ART

Conventionally, multilayer ceramic capacitors have been known. Typically, a multilayer ceramic capacitor includes a sintered ceramic body composed of a dielectric ceramic (dielectric material) such as barium titanate (BaTiO₃) or the like. The multilayer body includes therein an effective layer portion in which a plurality of internal electrodes are placed on each other with a ceramic layer (dielectric layer) interposed therebetween. The multilayer body further has external electrodes formed on opposite end surfaces thereof and electrically connected to the internal electrodes (for example, Patent Document 1).

In the multilayer ceramic capacitor described in Patent Document 1, a metal material is used as internal electrodes, and the external electrodes include a glass component and a plurality of metal components including a metal that is the same as or can be alloyed with the metal material forming the internal electrodes. The external electrodes are bonded to a circuit board via a conductive resin adhesive. The multilayer ceramic capacitor has a configuration in which the metal components have an area occupancy of 60% to 95% with respect to a cross-sectional area of the external electrode, and due to this configuration, the multilayer ceramic capacitor can be mounted on the circuit board at low cost and with high reliability without using solder.

### Citation List

### Patent Documents

Patent Document 1: Japanese Unexamined Patent Application, Publication No. 2001-237137

### DISCLOSURE OF THE INVENTION

### Problems to be Solved by the Invention

In a typical multilayer ceramic capacitor as described in Patent Document 1, the dielectric layers are typically thinner at end portions than at the center portion of the effective layer portion due to pressing or the like performed at the time of pressure bonding in a lamination pressing step. Therefore, dielectric breakdown often occurs at the end portions in the width direction where the dielectric layers have a small thickness, resulting in a disadvantage that the high-temperature load reliability deteriorates.

The reason why the dielectric breakdown occurs at the end portions in the width direction where the dielectric layers have a small thickness due to the pressure bonding performed in the lamination pressing step as described above is that in order to satisfy the recent demand for downsizing of the multilayer ceramic capacitors, the thicknesses of the dielectric layers are reduced whereby the number of ceramic particles in the lamination direction in the dielectric layers is reduced, which causes a decrease in voltage resistance.

Therefore, it is a main object of the present invention to provide a multilayer ceramic capacitor capable of suppressing dielectric breakdown at the end portions in the width direction of the multilayer body and improving high-temperature load reliability.

### Means for Solving the Problems

A multilayer ceramic capacitor according to the present invention includes: a multilayer body including a plurality of dielectric layers that are laminated, the multilayer body having a first main surface and a second main surface opposed to each other in a lamination direction of the plurality of dielectric layers, a first side surface and a second side surface opposed to each other in a width direction orthogonal to the lamination direction, and a first end surface and a second end surface opposed to each other in a length direction orthogonal to the lamination direction and the width direction; first internal electrode layers respectively disposed on the plurality of dielectric layers and exposed at the first end surface; second internal electrode layers respectively disposed on the plurality of dielectric layers and exposed at the second end surface; a first external electrode disposed on the first end surface; and a second external electrode disposed on the second end surface. The plurality of dielectric layers include a plurality of dielectric particles containing Ba and Ti, the dielectric particles have a core-shell structure including a core portion and a shell portion surrounding the core portion, cross-sectional areas of a plurality of the core portions of the dielectric particles viewed in the length direction of the multilayer body decrease in the width direction of the multilayer body toward each of the first side surface and the second side surface of the multilayer body, and cross-sectional areas of a plurality of the shell portions of the dielectric particles viewed in the length direction of the multilayer body increase in the width direction of the multilayer body toward each of the first side surface and the second side surface of the multilayer body.

Due to the configuration of the multilayer ceramic capacitor according to the present invention, in which the plurality of dielectric layers include the plurality of dielectric particles containing Ba and Ti, the dielectric particles have the core-shell structure including the core portion and the shell portion surrounding the core portion, the cross-sectional areas of the plurality of core portions of the dielectric particles viewed in the length direction of the multilayer body decrease in the width direction of the multilayer body toward each of the first side surface and the second side surface of the multilayer body, and the cross-sectional areas of the plurality of shell portions of the dielectric particles viewed in the length direction of the multilayer body increase in the width direction of the multilayer body toward each of the first side surface and the second side surface of the multilayer body, electric field concentration at grain boundaries between ceramic particles is alleviated, thereby reducing the risk of dielectric breakdown. This feature makes it possible to improve the high-temperature load reliability.

### Effects of the Invention

According to the present invention, in the multilayer ceramic capacitor, dielectric breakdown in the vicinity of a side surface of the multilayer body can be suppressed, and high-temperature load reliability can be improved.

The aforementioned object of the present invention, other objects thereof, features thereof, and advantages thereof will become clearer from the description of embodiments of the invention provided below with reference to the drawings.

### BRIEF DESCRIPTION OF THE DRAWINGS

FIG. 1 is an external perspective view illustrating an example of a multilayer ceramic capacitor according to an embodiment of the present invention;
FIG. 2 is a front view illustrating an example of a multilayer ceramic capacitor according to the embodiment of the present invention;
FIG. 3 is a plan view illustrating an example of a multilayer ceramic capacitor according to the embodiment of the present invention;
FIG. 4 is a schematic cross-sectional view taken along line IV-IV in FIG. 1;
FIG. 5 is a schematic cross-sectional view taken along line V-V in FIG. 1;
FIG. 6 is a schematic cross-sectional view taken along line VI-VI in FIG. 4;
FIG. 7A is a cross-sectional view taken along line IV-IV in FIG. 1, illustrating a structure in which a counter electrode portion of an internal electrode layer of a multilayer ceramic capacitor according to an embodiment of the present invention is divided into two;
FIG. 7B is a cross-sectional view taken along line IV-IV in FIG. 1, illustrating a structure in which a counter electrode portion of an internal electrode layer of a multilayer ceramic capacitor according to an embodiment of the present invention is divided into three; and
FIG. 7C is a cross-sectional view taken along line IV-IV in FIG. 1, illustrating a structure in which a counter electrode portion of an internal electrode layer of a multilayer ceramic capacitor according to the present invention is divided into four.
FIG. 8A is a conceptual diagram illustrating an example of a core-shell structure of a dielectric particle in a dielectric layer of a multilayer ceramic capacitor according to an embodiment of the present invention;
FIG. 8B is a conceptual diagram illustrating another example of a core-shell structure of a dielectric particle in the dielectric layer of the multilayer ceramic capacitor according to the embodiment of the present invention;
FIG. 9 is a diagram schematically illustrating a vicinity of a boundary between a central portion-region and an end portion-region of the dielectric layers in the inner layer portion of a multilayer ceramic capacitor according to an embodiment of the present invention;
FIG. 10A is a diagram for explaining one step of a method of manufacturing a multilayer ceramic capacitor according to an embodiment of the present invention; and
FIG. 10B is a diagram for explaining another step of the method of manufacturing the multilayer ceramic capacitor according to the embodiment of the present invention.

### PREFERRED MODE FOR CARRYING OUT THE INVENTION

An example of a multilayer ceramic capacitor 10 according to an embodiment of the present invention will be described below.

### 1. Multilayer Ceramic Capacitor

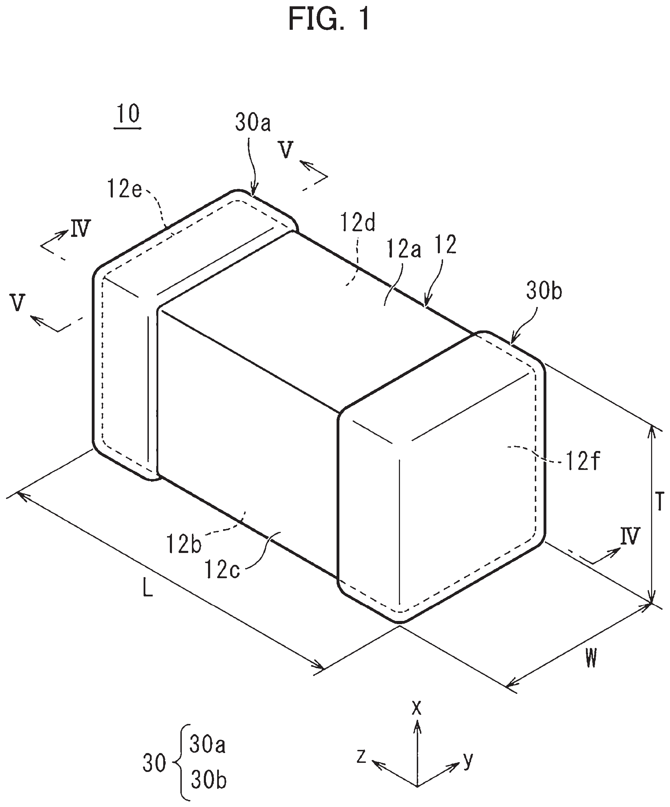

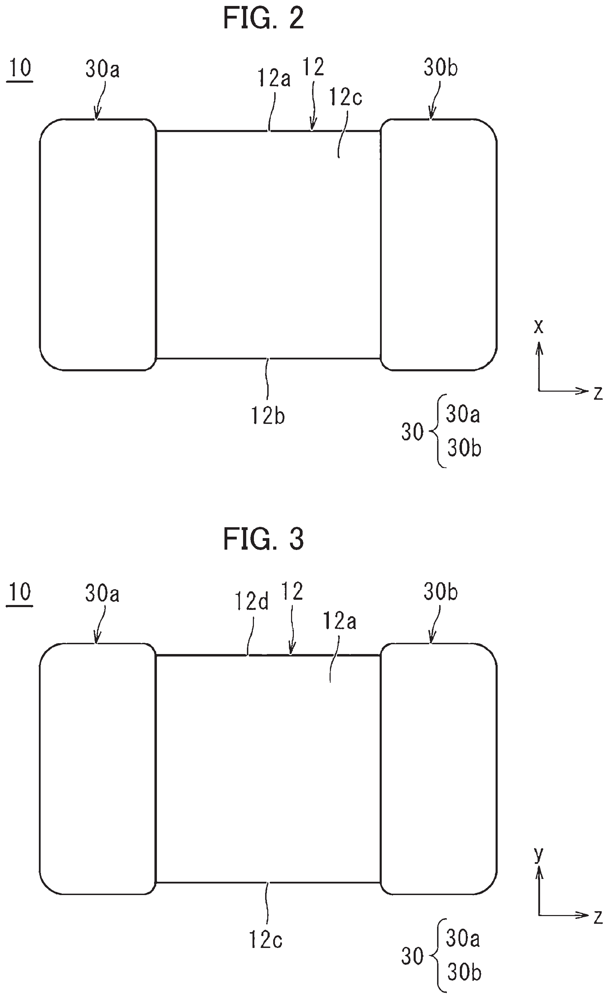

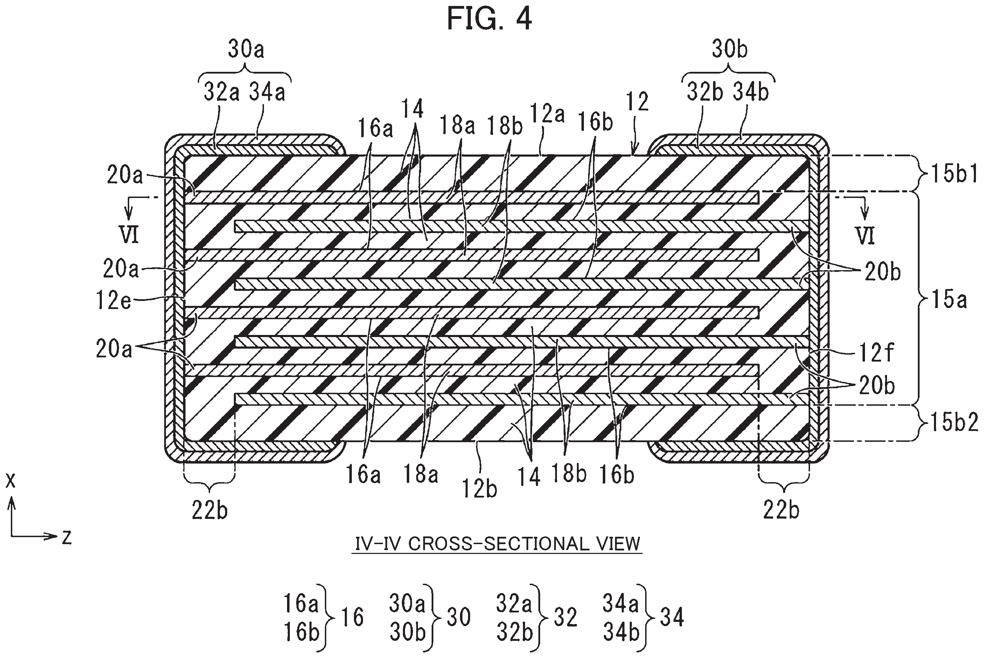

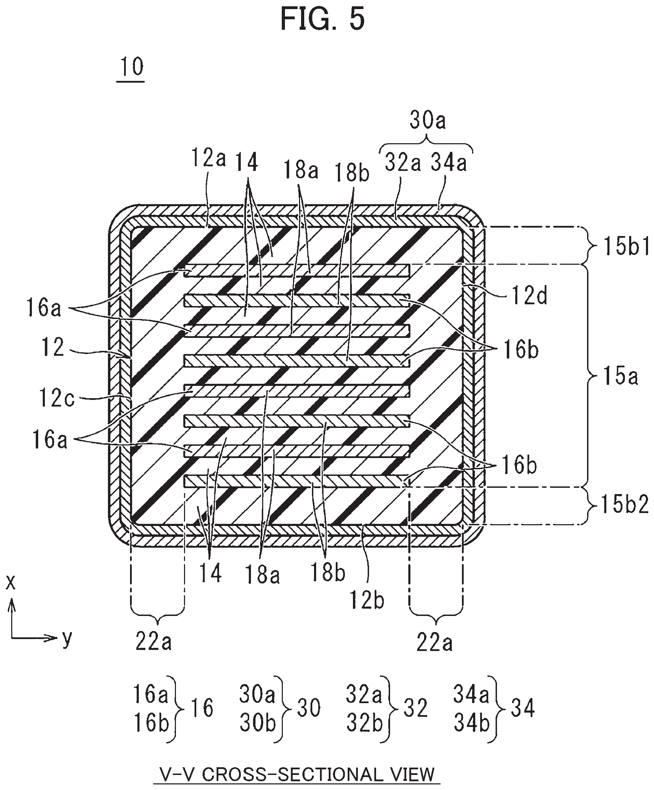

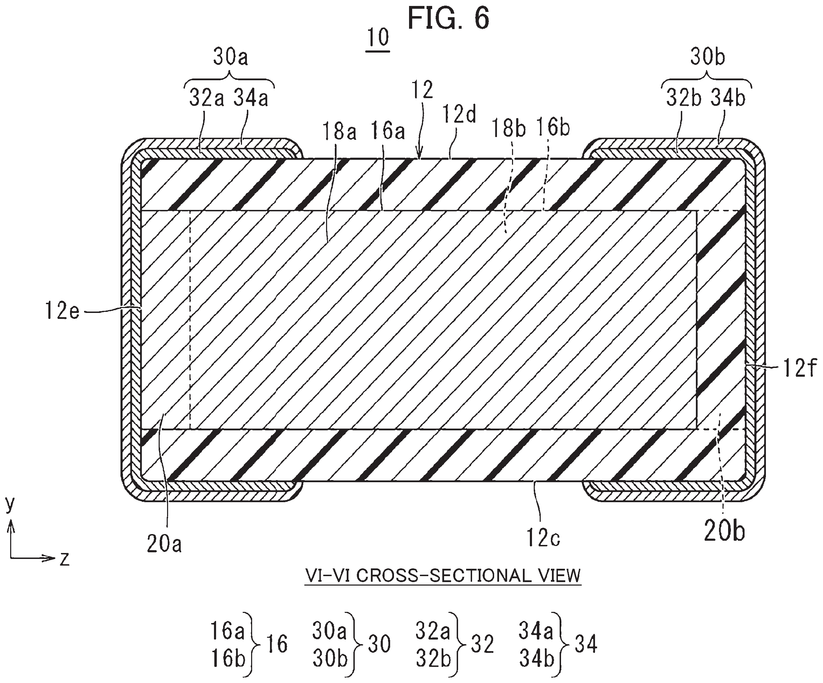

One example of a multilayer ceramic capacitor according to an embodiment of the present invention will be described. FIG. 2 is a front view illustrating the one example of the multilayer ceramic capacitor according to the embodiment of the present invention. FIG. 3 is a plan view illustrating the one example of the multilayer ceramic capacitor according to the embodiment of the present invention. FIG. 4 is a schematic cross-sectional view taken along line IV-IV in FIG. 1. FIG. 5 is a schematic cross-sectional view taken along line V-V in FIG. 1. FIG. 6 is a schematic cross-sectional view taken along line VI-VI in FIG. 4.

The multilayer ceramic capacitor 10 includes a multilayer body 12 and external electrodes 30. The multilayer body 12 is composed of an inner layer portion 15a in which a plurality of dielectric layers 14 and a plurality of internal electrode layers 16 are alternately laminated and which develops capacitance as will be described later, and a first outer layer portion 15b1 and a second outer layer portion 15b2 which are respectively disposed adjacent to an upper main surface and a lower main surface so as to sandwich the inner layer portion 15a therebetween.

Hereinafter, the multilayer body 12, the internal electrode layers 16, and the external electrodes 30 will be described in this order.

### (Multilayer Body)

The multilayer body 12 includes a plurality of laminated dielectric layers 14 and a plurality of laminated internal electrode layers 16. Further, the multilayer body 12 has a first main surface 12a and a second main surface 12b opposed to each other in a height direction x that is a lamination direction of the plurality of dielectric layers 14, a first side surface 12c and a second side surface 12d opposed to each other in a width direction y orthogonal to the height direction x, and a first end surface 12e and a second end surface 12f opposed to each other in a length direction z orthogonal to the height direction x and the width direction y. The length direction z is also defined as an L direction that connects the first end surface 12e and the second end surface 12f. The width direction y is also defined as a W direction that connects the first side surface 12c and the second side surface 12d. The height direction x is also defined as a T direction that connects the first main surface 12a and the second main surface 12b.

The multilayer body 12 has a rectangular parallelepiped shape. The term "rectangular parallelepiped shape" encompasses a rectangular parallelepiped having rounded corners and ridges. The corner is a portion where three adjacent surfaces of the multilayer body 12 meet each other, and the ridge is a portion where two adjacent surfaces of the multilayer body 12 meet each other. That is, a member having a "rectangular parallelepiped shape" refers to a general member having a first main surface 12a, a second main surface 12b, a first side surface 12c, a second side surface 12d, a first end surface 12e, and a second end surface 12f.

The first main surface 12a and the second main surface 12b, the first side surface 12c and the second side surface 12d, and the first end surface 12e and the second end surface 12f may have projections and depressions or the like formed in a portion or the entirety thereof.

As illustrated in FIGS. 4 and 5, the multilayer body 12 includes: the inner layer portion 15a in which the plurality of internal electrode layers 16 face each other in the height direction x, which connects the first main surface 12a and the second main surface 12b; the first outer layer portion 15b1 composed of two or more dielectric layers 14 sandwiched between the first main surface 12a and the internal electrode layer 16 closest to the first main surface 12a; and the second outer layer portion 15b2 composed of two or more dielectric layers 14 sandwiched between the second main surface 12b the internal electrode layer 16 closest to the second main surface 12b.

The first outer layer portion 15b1 is adjacent to the first main surface 12a of the multilayer body 12 and is an aggregate of two or more dielectric layers 14 sandwiched between the first main surface 12a and the internal electrode layer 16 closest to the first main surface 12a.

The second outer layer portion 15b2 is adjacent to the second main surface 12b of the multilayer body 12 and is an aggregate of two or more dielectric layers 14 sandwiched between the second main surface 12b and the internal electrode layer 16 closest to the second main surface 12b.

The inner layer portion 15a is a region sandwiched between the first outer layer portion 15b1 and the second outer layer portion 15b2.

The number of the laminated dielectric layers 14 is not particularly limited, but is preferably 10 or more and 2000 or less including the first outer layer portion 15b1 and the second outer layer portion 15b2. The thickness of each dielectric layer 14 is preferably about 0.5 µm or more and about 10 µm or less, for example.

The dielectric layers 14 include, as a main component, a dielectric material having a perovskite structure represented by a general formula ABO₃. In the general formula, A necessarily contains Ba, and may further contain at least one of Ca or Sr. B necessarily contains Ti, and may further contain at least one of Zr or Hf. Further, in accordance with desired characteristics of the multilayer body, a subcomponent may be added at a smaller content than the main component. Examples of the subcomponent include a Mn compound, an Fe compound, a Cr compound, a Co compound, a Ni compound, and the like.

More specifically, the dielectric layers 14 each include a plurality of dielectric particles containing Ba and Ti as main components of the dielectric material. Each of the dielectric particles has a core-shell structure including a core portion and a shell portion surrounding the core portion. The core portion is located in a center portion of the dielectric particle, and contains the subcomponent of the dielectric material solid-solved at a low concentration or is devoid of the solid-solved subcomponent. The shell portion surrounds the core portion to form a surface layer of the dielectric particle, and contains at least part of the subcomponents of the dielectric material solid-solved at a high concentration.

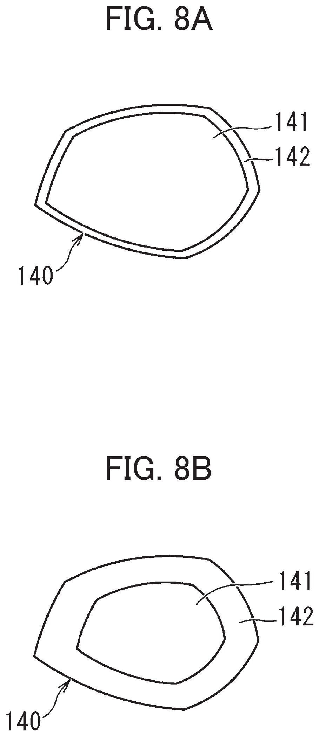

FIGS. 8A and 8B are conceptual cross-sectional views illustrating core-shell structures of the dielectric particles in the dielectric layers 14 of the present embodiment. As illustrated in FIG. 8A, the core-shell structure of the dielectric particle 140 includes a core portion 141 and a shell portion 142 surrounding the core portion 141.

The dielectric particles 140 of the present embodiment have a configuration in which cross-sectional areas of the core portions 141 in a WT cross section, i.e., the cross-sectional areas of the core portions 141 viewed in the length direction z of the multilayer body 12 decrease in the width direction y toward each of the first side surface 12c and the second side surface 12d, and the cross-sectional areas of the shell portions 142 in the WT cross section increase in the width direction y toward each of the first side surface 12c and the second side surface 12d.

A specific description is given by referring to the cross-sectional view of FIG. 5 as an example. In the inner layer portion 15a, the cross-sectional areas of a WT cross section of the core-shell structure have a relationship in which the dielectric particles disposed in the vicinity of the first side surface 12c and the vicinity of the second side surface 12d have a smaller cross-sectional area of the core portion 141 and a larger cross-sectional area of the shell portion 142 than the dielectric particles disposed in the central portion in the width direction y. Here, in each of the plurality of dielectric layers 14 in the inner layer portion 15a, a region in the central portion in the width direction y of the multilayer body 12 is referred to as a central portion-region, and regions in end portions in the width direction y of the multilayer body 12, that is, regions close to the first side surface 12c and the second side surface 12d in the width direction y are referred to as end portion-regions.

FIG. 8A illustrates the core-shell structure of the dielectric particle 140 in the central portion-region of the dielectric layer 14, and FIG. 8B illustrates the core-shell structure of the dielectric particle 140 in the end portion-region of the dielectric layer 14. As illustrated in these figures, the cross-sectional area of the core portion 141 is smaller in the end portion-region than in the central portion-region, whereas the cross-sectional area of the shell portion 142 is larger in the end portion-region than in the central portion-region.

As illustrated in FIG. 8B, the shell portion 142 of the dielectric particles 140 disposed in the end portion-region of the dielectric layers 14 has an increased cross-sectional area due to the subcomponent solid-solved in the dielectric particles 140. Specifically, progress of the solid solution of the subcomponent in the dielectric particles 140 disposed in the end portion-regions results in an increase in the cross-sectional area of the shell portion 142. The increase in the cross-sectional area of the shell portion 142 alleviates electric field concentration at grain boundaries between ceramic particles, thereby reducing the risk of dielectric breakdown. As a result, the high-temperature load reliability can be improved.

In the present embodiment, the plurality of dielectric layers 14 in the inner layer portion 15a preferably have a larger dimension in the height direction x in the central portion-region than in the end portion-regions.

As a result, even in a case where the dielectric layers 14 have a small thickness in the end portion-regions in the inner layer portion 15a by employing a general method of manufacturing a multilayer ceramic capacitor, the high-temperature load reliability can be improved.

Furthermore, in the present embodiment, the shell portions 142 of the dielectric particles 140 preferably contain a metal, and the metal contained in the shell portions 142 includes at least Dy and preferably includes a transition metal. The metal contained in the shell portions 142 is added as a subcomponent to the dielectric material for the dielectric layers 14.

Due to the above configuration, movement of oxygen vacancies that cause insulation deterioration is suppressed, making it possible to obtain a further effect of improving the high-temperature load reliability.

Further, in the present embodiment, the concentration of Dy contained in the shell portions 142 is preferably 4 mol% or more and 8 mol% or less.

The above configuration makes it possible to obtain a remarkable effect of improving the high-temperature load reliability. In a case where the concentration of Dy is less than 4 mol%, Dy becomes less effective in suppressing the movement of oxygen vacancies. On the other hand, in a case where the concentration of Dy is more than 8 mol%, segregation of Dy begins, the resistance value rises, electric field concentration begins to occur, and high-temperature load reliability deteriorates.

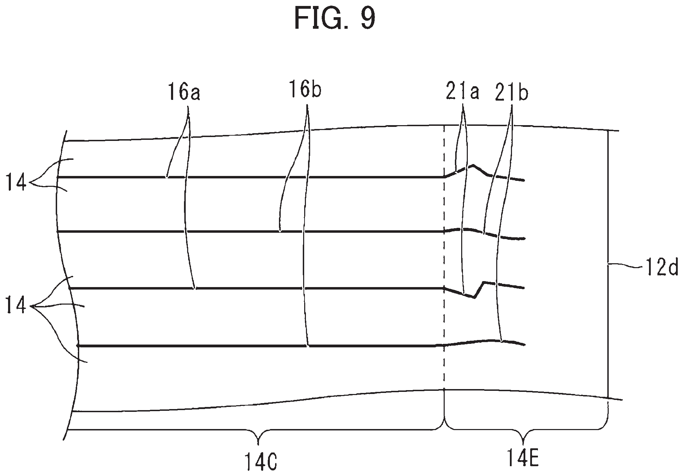

Here, reference is made to FIG. 9, which is a diagram corresponding to the cross-sectional view of FIG. 5 and schematically illustrates the vicinity of the boundary between a central portion-region 14C and an end portion-region 14E of the dielectric layers 14 in the inner layer portion 15a of the multilayer body 12. Note that FIG. 9 is an enlarged view of a side close to the second side surface 12d of the multilayer body 12 as an example.

In the multilayer body 12, each first internal electrode layer 16a has a shape of a plane spreading in a direction substantially perpendicular to the height direction x in the central portion-region 14C, while having a non-straight portion 21a in the end portion-region 14E. The non-straight portion 21a constitutes a change in shape including a change in the height direction x, with respect to the planar shape in the central portion-region 14C.

Likewise, each second internal electrode layer 20b has a shape of a plane spreading in a direction substantially perpendicular to the height direction x in the central portion-region 14C, while having a non-straight portion 21b in the end portion-region 14E. The non-straight portion 21b constitutes a change in shape including a change in the height direction x, with respect to the planar shape in the central portion-region 14C.

Each of the non-straight portions 21a and the non-straight portions 21b preferably has at least one of modes of change in its shape, namely a bent portion in a bent mode, a curved portion in a curved mode, and a folded portion in a folded mode. FIG. 9 schematically illustrates, as an example, the non-straight portions 21a having a bent portion and a folded portion, and the non-straight portions 21b having a curved portion.

Further, in the present embodiment, as illustrated in FIG. 9, each first internal electrode layer 16a and each second internal electrode layer 16b preferably have, in an edge portion thereof, a plurality of the non-straight portions 21a and a plurality of the non-straight portions 21b, respectively.

Here, the cross-sectional areas of the core portion 141 and the shell portion 142 of the dielectric particle 140 are measured in the following manner. First, the multilayer ceramic capacitor 10 is manually or automatically polished to a position of L/2 in the length direction z to expose a polished surface (WT cross section). Next, an observation portion is shaved off from the polished surface using a focused ion beam (FIB) to thereby form a test sample having a thickness of about 100 nm. The test sample is then subjected to element mapping by a scanning transmission electron microscope (STEM)/energy dispersive X-ray fluorescence spectroscopy (EDX), and the cross-sectional areas of the core portion 141 and the shell portion 142 are measured.

The average thickness of each of the plurality of dielectric layers 14 in the multilayer body 12 is measured in the following manner. First, a WT cross section is exposed by way of polishing in the same manner as in the measurement of the cross-sectional areas of the core portion 141 and the shell portion 142 of the dielectric particle 140, and then, is observed using a STEM. Next, thicknesses are measured on a total of five lines including a center line extending in the height direction x and passing through the center of the WT cross section of the multilayer body 12 and two lines arranged on each side of the center line at equal intervals. The average value of the five measured values is defined as the average thickness of the dielectric layer 14. In order to obtain a more accurate average thickness, the above five measured values are obtained in each of an upper portion, a middle portion, and a lower portion along the height direction x, and the average value of these measured values is defined as the average thickness.

### (Internal Electrode Layer)

As illustrated in FIGS. 4 and 5, the internal electrode layers 16 include first internal electrode layers 16a and second internal electrode layers 16b. The first internal electrode layers 16a and the second internal electrode layers 16b are alternately laminated at equal intervals in the height direction x with the dielectric layers 14 interposed therebetween. The first internal electrode layers 16a and the second internal electrode layers 16b are each substantially parallel to the first main surface 12a and the second main surface 12b.

Each first internal electrode layer 16a is disposed on a surface of the corresponding dielectric layer 14. Each first internal electrode layer 16a includes a first counter electrode portion 18a facing the second internal electrode layer 16b, and a first extension electrode portion 20a disposed in one end portion of the first internal electrode layer 16a and extending from the first counter electrode portion 18a to reach the first end surface 12e of the multilayer body 12. The first extension electrode portion 20a has an end extended toward the first end surface 12e to be exposed. The other end of each first internal electrode layer 16a is located slightly inwardly with respect to the second end surface 12f. The first extension electrode portion 20a is not exposed at the first main surface 12a, the second main surface 12b, the first side surface 12c, or the second side surface 12d.

Although the first counter electrode portion 18a of each first internal electrode layer 16a may have any shape without particular limitation, it preferably has a rectangular shape in plan view. Nevertheless, the first counter electrode portion 18a may have a shape with rounded corner portions in plan view or a shape with oblique corner portions (tapered shape) in plan view. Alternatively, it may have a tapered shape that is inclined as approaching either side in plan view.

Although the first extension electrode portion 20a of each first internal electrode layer 16a may have any shape without particular limitation, it preferably has a rectangular shape in plan view. Nevertheless, the first extension electrode portion 20a may have a shape with rounded corner portions in plan view or a shape with oblique corner portions (tapered shape) in plan view. Alternatively, it may have a tapered shape that is inclined as approaching either side in plan view.

Each second internal electrode layer 16b is disposed on a surface of the corresponding dielectric layer 14 that is different from the dielectric layer 14 on which the first internal electrode layer 16a is disposed. Each second internal electrode layer 16b includes a second counter electrode portion 18b facing the first internal electrode layer 16a, and a second extension electrode portion 20b disposed in one end portion of the second internal electrode layer 16b and extending from the second counter electrode portion 18b to reach the second end surface 12f of the multilayer body 12. The second extension electrode portion 20b has an end extended toward the second end surface 12f to be exposed. The other end of each second internal electrode layer 16b is located slightly inwardly with respect to the first end surface 12e. The second extension electrode portion 20b is not exposed at the first main surface 12a, the second main surface 12b, the first side surface 12c, or the second side surface 12d.

Although the second counter electrode portion 18b of each second internal electrode layer 16b may have any shape without particular limitation, it preferably has a rectangular shape in plan view. Nevertheless, the second counter electrode portion 18b may have a shape with rounded corner portions in plan view or a shape with oblique corner portions (tapered shape) in plan view. Alternatively, it may have a tapered shape that is inclined as approaching either side in plan view.

Although the second extension electrode portion 20b of each second internal electrode layer 16b may have any shape without particular limitation, it preferably has a rectangular shape in plan view. Nevertheless, the second extension electrode portion 20b may have a shape with rounded corner portions in plan view or a shape with oblique corner portions (tapered shape) in plan view. Alternatively, it may have a tapered shape that is inclined as approaching either side in plan view.

The multilayer body 12 includes side portions 22a (hereinafter each may be referred to as a "W gap"). One of the side portions 22a is formed between the first side surface 12c and one end in the width direction y of each first counter electrode portion 18a and between the first side surface 12c and one end in the width direction y of each second counter electrode portion 18b, and the other of the side portions 22a is formed between the second side surface 12d and the other end in the width direction y of each first counter electrode portion 18a and between the second side surface 12d and the other end in the width direction y of each second counter electrode portion 18b. The multilayer body 12 further includes end portions 22b (hereinafter each may be referred to as an "L gap"). One of the end portions 22b is formed between the second end surface 12f and the end of each first internal electrode layer 16a opposite to the first extension electrode portion 20a, and the other of the end portions 22b is formed between the first end surface 12e and the end of each second internal electrode layer 16b opposite to the second extension electrode portion 20b.

The internal electrode layers 16 can be constituted of, for example, an appropriate conductive material, examples of which include metals such as Ni, Cu, Ag, Pd, and Au, and an alloy containing at least one of these metals such as a Ag-Pd alloy. In a case where the external electrodes 30 (described later) each include a conductive resin layer as a base electrode layer, the metal constituting the internal electrode layers 16 forms a compound with a metal constituting a conductive filler contained in the conductive resin layer.

The number of laminated internal electrode layers 16 is not particularly limited, but is preferably 10 or more and 2000 or less. The thickness of each internal electrode layer 16 is preferably about 0.2 µm or more and about 2.0 µm or less.

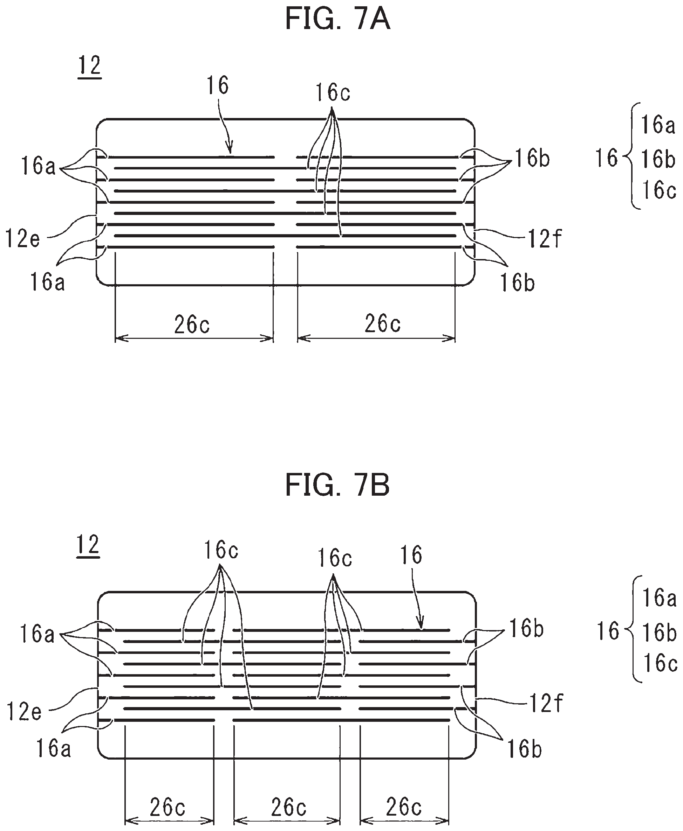

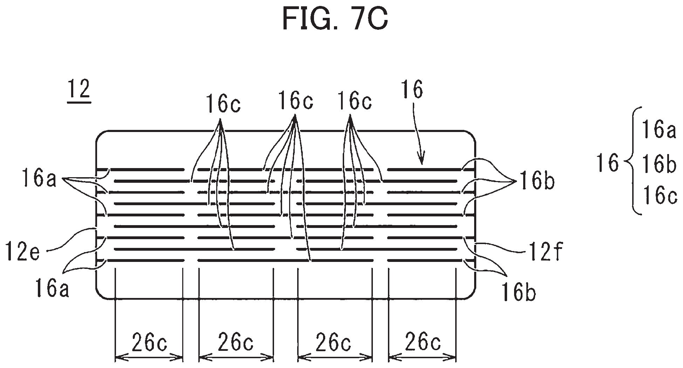

Referring to FIG. 7, the multilayer body 12 illustrated in FIG. 1 may have a structure in which floating internal electrode layers 16c that are not extended toward either the first end surface 12e or the second end surface 12f are arranged in addition to the first internal electrode layers 16a and the second internal electrode layers 16b, and in which a counter electrode portion 26c is divided into two or more segments due to the floating internal electrode layers 16c. For example, the multilayer body may have a two-segment structure illustrated in FIG. 7A, a three-segment structure illustrated in FIG. 7B, or a four-segment structure illustrated in FIG. 7C, and it goes without saying that it may have a four or more-segment structure. By adopting the structure in which the counter electrode portion 26c is divided into two or more segments, a plurality of capacitor components are formed between the first internal electrode layers 16a, the second internal electrode layers 16b, and the floating internal electrode layers 16c that face each other, and these capacitor components are connected in series. As a result, a low voltage is applied to each of the capacitor components, thereby allowing the multilayer ceramic capacitor 10 to have a high breakdown voltage.

Similarly to the first internal electrode layers 16a and the second internal electrode layers 16b, the floating internal electrode layers 16c can be composed of, for example, an appropriate conductive material, examples of which include metals such as Ni, Cu, Ag, Pd and Au, and an alloy containing at least one of these metals such as a Ag-Pd alloy.

### (External Electrode)

As illustrated in FIGS. 1 to 3, the external electrodes 30 are disposed on and around the first end surface 12e and the second end surface 12f of the multilayer body 12.

Each external electrode 30 includes a base electrode layer 32 containing a metal component and glass, and preferably includes a plating layer 34 disposed on a surface of the base electrode layer 32.

The external electrodes 30 include a first external electrode 30a and a second external electrode 30b.

The first external electrode 30a is connected to the first internal electrode layers 16a and is disposed on at least the surface of the first end surface 12e. The first external electrode 30a extends from the first end surface 12e of the multilayer body 12 to be also disposed on a portion of the first main surface 12a, a portion of the second main surface 12b, a portion of the first side surface 12c, and a portion of the second side surface 12d. In this case, the first external electrode 30a is electrically connected to the first extension electrode portions 20a of the first internal electrode layers 16a.

The second external electrode 30b is connected to the second internal electrode layers 16b and is disposed on at least the surface of the second end surface 12f. The second external electrode 30b extends from the second end surface 12f of the multilayer body 12 to be also disposed on a portion of the first main surface 12a, a portion of the second main surface 12b, a portion of the first side surface 12c, and a portion of the second side surface 12d. In this case, the second external electrode 30b is electrically connected to the second extension electrode portions 20b of the second internal electrode layers 16b.

In the multilayer body 12, the first counter electrode portions 18a of the first internal electrode layers 16a and the second counter electrode portions 18b of the second internal electrode layers 16b face each other with the dielectric layers 14 interposed therebetween, thereby producing capacitance. As a result, capacitance can be obtained between the first external electrode 30a to which the first internal electrode layers 16a are connected and the second external electrode 30b to which the second internal electrode layers 16b are connected, whereby the characteristics of the capacitor are developed.

The base electrode layer 32 includes a first base electrode layer 32a and a second base electrode layer 32b.

The first base electrode layer 32a is connected to the first internal electrode layers 16a and is disposed on the surface of the first end surface 12e. The first base electrode layer 32a extends from the first end surface 12e to be also disposed on a portion of the first main surface 12a, a portion of the second main surface 12b, a portion of the first side surface 12c, and a portion of the second side surface 12d. In this case, the first base electrode layer 32a is electrically connected to the first extension electrode portions 20a of the first internal electrode layers 16a.

The second base electrode layer 32b is connected to the second internal electrode layers 16b and is disposed on the surface of the second end surface 12f. The second base electrode layer 32b extends from the second end surface 12f to be also disposed on a portion of the first main surface 12a, a portion of the second main surface 12b, a portion of the first side surface 12c, and a portion of the second side surface 12d. In this case, the second base electrode layer 32b is electrically connected to the second extension electrode portions 20b of the second internal electrode layers 16b.

The base electrode layer 32 includes at least one selected from a baked layer, a conductive resin layer, a thin film layer, or the like.

The following describes a case where the base electrode layer 32 is the above-mentioned baked layer, a case where the base electrode layer 32 is the above-mentioned conductive resin layer, and a case where the base electrode layer 32 is the above-mentioned thin film layer.

### (In the Case of Baked Layer)

The baked layer includes a metal component and glass. The metal component of the baked layer includes, for example, at least one selected from Cu, Ni, Ag, Pd, a Ag-Pd alloy, Au, or the like. The baked layer is formed by baking a conductive paste containing glass and the metal and applied to the multilayer body. The baked layer is formed by baking a conductive paste containing glass and the metal and applied to the multilayer body. The baked layer is formed by way of firing a multilayer chip including the internal electrode layers 16 and the dielectric layers 14 concurrently with the conductive paste applied to the multilayer chip. However, the baked layer may be formed by way of baking after the firing of the multilayer chip including the internal electrode layers 16 and the dielectric layers 14. The baked layer may include a plurality of layers.

Preferably, the first base electrode layer 32a on the first end surface 12e has, in its central portion in the height direction x, a thickness of, for example, about 10 µm or greater and about 150 µm or less in the length direction z connecting the first end surface 12e and the second end surface 12f.

Preferably, the second base electrode layer 32b on the second end surface 12f has, in its central portion in the height direction x, a thickness of, for example, about 10 µm or greater and about 150 µm or less in the length direction z connecting the first end surface 12e and the second end surface 12f.

Preferably, the first base electrode layer 32a on a portion of the first main surface 12a and a portion of the second main surface 12b has, in its central portion in the length direction z connecting the first end surface 12e and the second end surface 12f, a thickness of, for example, about 10 µm or greater and about 100 µm or less in the height direction x connecting the first main surface 12a and the second main surface 12b.

Preferably, the second base electrode layer 32b on a portion of the first main surface 12a and a portion of the second main surface 12b has, in its central portion in the length direction z connecting the first end surface 12e and the second end surface 12f, a thickness of, for example, about 10 µm or greater and about 100 µm or less in the height direction x connecting the first main surface 12a and the second main surface 12b.

Preferably, the first base electrode layer 32a on a portion of the first side surface 12c and a portion of the second side surface 12d has, in its central portion in the length direction z connecting the first end surface 12e and the second end surface 12f, a thickness of, for example, about 10 µm or greater and about 100 µm or less in the width direction y connecting the first side surface 12c and the second side surface 12d.

Preferably, the second base electrode layer 32b on a portion of the first side surface 12c and a portion of the second side surface 12d has, in its central portion in the length direction z connecting the first end surface 12e and the second end surface 12f, a thickness of, for example, about 10 µm or greater and about 100 µm or less in the width direction y connecting the first side surface 12c and the second side surface 12d.

### (In the Case of Conductive Resin Layer)

The conductive resin layer includes a first conductive resin layer and a second conductive resin layer.

Preferably, the first conductive resin layer is provided as the first base electrode layer 32a and covers another layer such as a baked layer. Preferably, the second conductive resin layer is provided as the second base electrode layer 32b and covers another layer such as a baked layer.

Specifically, it is preferable that the first conductive resin layer as the first base electrode layer 32a and the second conductive resin layer as the second base electrode layer 32b are respectively disposed on the other layers such as the baked layers respectively formed on the first end surface 12e and the second end surface 12f, and further extend over portions of the other layers such as the baked layers disposed on the first main surface 12a, the second main surface 12b, the first side surface 12c, and the second side surface 12d. Nevertheless, the first conductive resin layer and the second conductive resin layer may be disposed only on the other layers such as the baked layers on the first end surface 12e and the second end surface 12f.

Each of the first conductive resin layer and the second conductive resin layer preferably has a thickness of, for example, about 10 µm or greater and about 200 µm or less.

Each of the first conductive resin layer and the second conductive resin layer contains a thermosetting resin and a metal component.

Due to including the thermosetting resin, the first conductive resin layer and the second conductive resin layer are more flexible than the base electrode layer 32 that is composed of, for example, a plated film or a fired product of a conductive paste. For this reason, the conductive resin layers function as buffer layers, making it possible to prevent cracks from forming in the multilayer ceramic capacitor 10 even when a physical impact or an impact due to a thermal cycle is applied to the multilayer ceramic capacitor 10.

Specific examples of the thermosetting resin include various known thermosetting resins such as an epoxy resin, a phenol resin, a urethane resin, a silicone resin, a polyimide resin, and the like. Among them, the epoxy resin excellent in heat resistance, moisture resistance, adhesion, etc. is one of the most suitable resins.

The first conductive resin layer and the second conductive resin layer preferably contain a curing agent together with the thermosetting resin. In a case of using an epoxy resin as the base resin, various known compounds such as a phenol-based compound, an amine-based compound, an acid anhydride-based compound, an imidazole-based compound, and the like can be used as the curing agent for the epoxy resin.

As the metal contained in the first conductive resin layer and the second conductive resin layer, Ag, Cu, or an alloy thereof can be used. Alternatively, a metal powder having a surface coated with Ag can be used. Preferably, a Ag-coated Cu or Ni powder is used as the metal powder.

Alternatively, Cu subjected to an antioxidant treatment can be used. The reason for using the Ag-coated metal is that an inexpensive metal can be employed as the base material while the above-described characteristics of Ag are maintained.

The first conductive resin layer and the second conductive resin layer preferably contain the metal in an amount of 35 vol% or more and 75 vol% or less with respect to the total volume of the conductive resin.

The metal contained in the first conductive resin layer and the second conductive resin layer may have any shape without particular limitation. The conductive filler may have a spherical shape, a flat shape, or the like.

The metal contained in the first conductive resin layer and the second conductive resin layer may have any average particle diameter without particular limitation. The conductive filler may have an average particle diameter of, for example, about 0.3 µm or greater and about 10 µm or less.

The metal contained in the first conductive resin layer and the second conductive resin layer is mainly responsible for the electrical conductivity of the conductive resin layers. Specifically, the conductive filler particles in contact with each other form conduction paths in the conductive resin layers.

The metal contained in the first conductive resin layer and the second conductive resin layer may have a spherical shape, a flat shape, or the like, but it is preferable to use a mixture of a spherical metal powder and a flat metal powder.

Each of the first conductive resin layer and the second conductive resin layer may include a resin layer containing conductive particles and a thermosetting resin.

The conductive resin layers may be formed directly on the multilayer body without forming the baked layers.

### (In the Case of Thin Film Layer)

In the case where the base electrode layer 32 is formed as a thin film layer, the thin film layer is formed by a thin film forming method such as sputtering or a vapor deposition. The thin film layer is composed of deposited metal particles and has a thickness of 10 µm or less.

Next, the plating layer 34 disposed on the base electrode layer 32 will be described with reference to FIGS. 4 and 5. The plating layer 34 includes a first plating layer 34a and a second plating layer 34b.

The first plating layer 34a and the second plating layer 34b include, for example, at least one selected from Cu, Ni, Sn, Ag, Pd, a Ag-Pd alloy, Au, or the like.

The first plating layer 34a is disposed so as to completely cover the first base electrode layer 32a. The second plating layer 34b is disposed so as to completely cover the second base electrode layer 32b.

Each of the first plating layer 34a and the second plating layer 34b may be composed of a plurality of layers. In this case, each plating layer 34 preferably has a two-layer structure including a lower plating layer (Ni plating layer) constituted of Ni plating provided on the base electrode layer 32 and an upper plating layer (Sn plating layer) constituted of Sn plating provided on the lower plating layer. In other words, in this case, the first plating layer 34a includes a first lower plating layer and a first upper plating layer disposed on a surface of the first lower plating layer. Likewise, the second plating layer 34b includes a second lower plating layer and a second upper plating layer disposed on a surface of the second lower plating layer.

Each lower plating layer constituted of Ni plating is provided in order to prevent the base electrode layer 32 from being eroded by solder when the multilayer ceramic capacitor 10 is mounted, and each upper plating layer constituted of Sn plating is provided in order to facilitate the mounting of the multilayer ceramic capacitor 10 by improving solder wettability when the multilayer ceramic capacitor 10 is mounted.

Preferably, each of the lower plating layer and the upper plating layer has a thickness of 1.0 µm or greater and 15.0 µm or less.

As illustrated in FIG. 1, the dimension in the length direction z of the multilayer ceramic capacitor 10 including the multilayer body 12, the first external electrode 30a, and the second external electrode 30b is defined as a dimension L, the dimension in the height direction x of the multilayer ceramic capacitor 10 including the multilayer body 12, the first external electrode 30a, and the second external electrode 30b is defined as a dimension T, and the dimension in the width direction y of the multilayer ceramic capacitor 10 including the multilayer body 12, the first external electrode 30a, and the second external electrode 30b is defined as a dimension W. The multilayer ceramic capacitor 10 is designed such that the dimension L in the length direction z is 0.2 mm or more and 10.0 mm or less, the dimension W in the width direction y is 0.1 mm or more and 10.0 mm or less, and the dimension T in the height direction x is 0.1 mm or more and 5.0 mm or less. The dimensions of the multilayer ceramic capacitor 10 can be measured using a microscope.

In the multilayer ceramic capacitor 10 according to the embodiment illustrated in FIG. 1, the dielectric layers 14 include a plurality of dielectric particles 140 containing Ba and Ti, and the dielectric particles 140 have the core-shell structure including the core portion 141 and the shell portion 142 surrounding the core portion 141. The cross-sectional areas of the core portions 141 in a WT cross section, i.e., the cross-sectional areas of the core portions 141 viewed in the length direction z of the multilayer body 12, decrease in the width direction y toward each of the first end surface 12e and the second end surface 12f, and the cross-sectional areas of the shell portions 142 in the WT cross section increase in the width direction y toward each of the first end surface 12e and the second end surface 12f. This feature makes it possible to improve the high-temperature load reliability of the multilayer ceramic capacitor.

Further, in the multilayer ceramic capacitor 10, each of the plurality of dielectric layers 14 in the inner layer portion 15a has the central portion-region in the central portion in the width direction y of the multilayer body 12, and the end portion-regions respectively adjacent to the first side surface 12c and the second side surface 12d in the width direction y. The central portion-region has a larger dimension in the height direction x than the end portion-regions. Due to this feature, even in a case where the dielectric layers 14 have a small thickness in the end portion-regions in the inner layer portion 15a by employing a general method of manufacturing a multilayer ceramic capacitor, the high-temperature load reliability can be improved.

Further, in the multilayer ceramic capacitor 10, the shell portion 142 of each dielectric particle 140 in the dielectric layers 14 contains a metal. The metal contained in the shell portion 142 includes at least Dy and preferably includes a transition metal. This feature makes it possible to obtain a further effect of improving the high-temperature load reliability.

Furthermore, in the multilayer ceramic capacitor 10, the concentration of Dy contained in the shell portions 142 is preferably 4 mol% or more and 8 mol% or less. This feature makes it possible to obtain a remarkable effect of improving the high-temperature load reliability.

Further, in the end portion-regions of the multilayer ceramic capacitor 10, the first internal electrode layers 16a and the second internal electrode layers 16b preferably have non-straight portions 21a and 21b. This feature makes it possible to obtain a further remarkable effect of improving the high-temperature load reliability.

### 2. Method of Manufacturing Multilayer Ceramic Capacitor

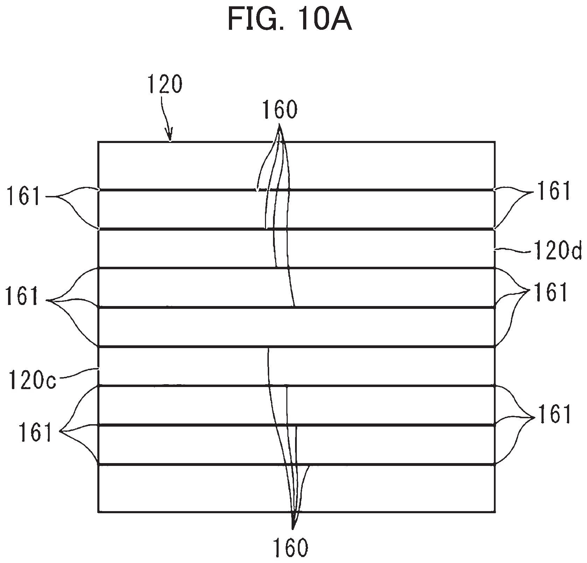

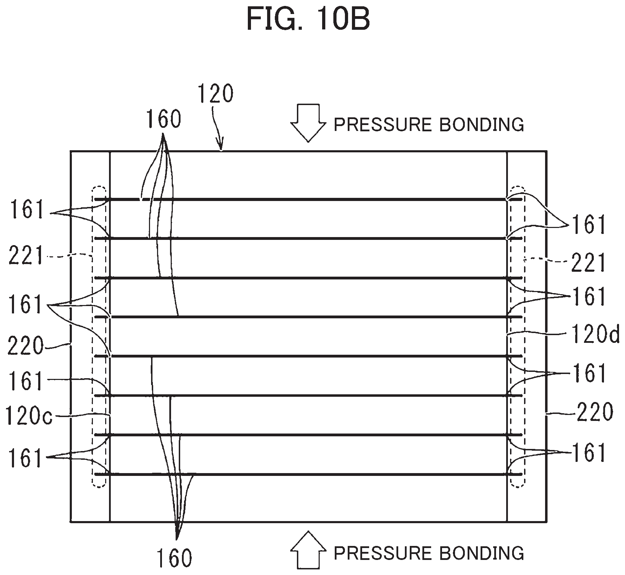

Next, a method of manufacturing the multilayer ceramic capacitor of the above embodiment will be described.
(1) Dielectric sheets and an internal electrode layer-forming conductive paste are prepared. The dielectric sheets and the internal electrode layer-forming conductive paste contain a binder (e.g., a known organic binder) and a solvent (e.g., a known organic binder).
(2) Next, the internal electrode layer-forming conductive paste is printed in a predetermined pattern on the dielectric sheets by, for example, screen printing or gravure printing, thereby preparing the dielectric sheets having thereon a first internal electrode pattern corresponding to the first internal electrode layer 16a and the dielectric sheets having thereon a second internal electrode pattern corresponding to the second internal electrode layer 16b. Additionally, dielectric sheets devoid of printed internal electrode pattern are also prepared as outer layer-forming dielectric sheets.
(3) A predetermined number of outer layer-forming dielectric sheets devoid of printed internal electrode pattern are laminated together to form a portion to become the second outer layer portion, and the dielectric sheets having thereon the first internal electrode pattern and the dielectric sheets having thereon the second internal electrode pattern are sequentially laminated to form a portion to become the inner layer portion.
(4) A predetermined number of dielectric sheets devoid of printed internal electrode pattern are further laminated on the internal electrode pattern corresponding to the internal electrode layer on the outermost surface of the inner layer portion, thereby forming a portion to become the first outer layer portion. In this way, a multilayer sheet is produced.
(5) The multilayer sheet is pressed in the lamination direction by means of isostatic pressing or the like to produce a multilayer block.
(6) The multilayer block is cut into a predetermined size, thereby producing multilayer chips (hereinafter referred to as base bodies). In this step, as illustrated in FIG. 10A, the base body 120 is formed so that pattern end portions 161 of the internal electrode patterns 160 are exposed on each of a side surface 120c and a side surface 120d that are to be disposed adjacent to the first side surface 12c and the second side surface 12d of the finished multilayer body 12, respectively. At this time, corners and ridges of the base body 120 may be rounded by barrel polishing or the like.
(7) Next, a ceramic paste containing crystal particles is applied to the side surface 120c and the side surface 120d of each base body 120 to form side margins 220 that are different from the base body 120 that is to form the end portion-regions. The ceramic paste contains dielectric particles having a composition different from that of the dielectric sheet prepared in the step (1), specifically, a composition in which the ratio of the subcomponent to the main component of the dielectric material is higher. As a result, the dielectric particles in the side margins 220 different from the base body 120 and the dielectric particles in the central portion of the base body 120 are made to have different cross-sectional areas of the core portion and different cross-sectional areas of the shell portion.
(8) Next, the base body 120 having the side margins 220 formed thereon is pressure-bonded in the direction along the lamination direction of laminated sheets. As a result, a pressure spreading in a direction orthogonal to the lamination direction is applied to the base body 120 itself, and as illustrated in FIG. 10B, the pattern end portions 161 of the internal electrode patterns 160 on the side surface 120c and the side surface 120d of the base body 120 extend to an interior 221 of each side margin 220 formed in the step (7), and are curved, bent, and/or folded in the interior 221 of each side margin 220 to form the non-straight portions.
(9) Subsequently, the base electrode layer 32 is formed. The following description applies to a case where the base electrode layer 32 is a baked layer. In order to form each of the first base electrode layer 32a and the second base electrode layer 32b, a base electrode-forming conductive paste containing a glass component and a metal component is prepared.
(10) The conductive paste is applied to the first end surface 12e and the second end surface 12f, which are the opposite end surfaces of the multilayer body 12, by a method such as dipping or screen printing, and then baking is performed to form the first base electrode layer 32a and the second base electrode layer 32b. The temperature of the baking in this step is preferably 700°C or higher and 900°C or lower.
(11) In a case where the base electrode layers are conductive resin layers, the conductive resin layers can be formed by the following method. The conductive resin layers may be formed on the surfaces of baked layers, or directly on the multilayer body as a single layer without forming the baked layers.

An example of the method of forming the conductive resin layers includes applying a conductive resin paste containing a thermosetting resin and a metal component to the baked layers or the multilayer body, and performing heat treatment at a temperature of 250°C or higher and 550°C or lower to thermally cure the resin, thereby forming the conductive resin layers. The heat treatment in this step is preferably performed in a N₂ atmosphere. Further, in order to prevent scattering of the resin and oxidation of various metal components, the oxygen concentration is preferably reduced to 100 ppm or less.

An Example of a method of applying the conductive resin paste includes applying the conductive resin paste by extruding the conductive resin paste through a slit or applying the conductive resin paste by roller transfer.

(12) If necessary, plating is provided on the surface of the base electrode layers to form a plating layer. In the present embodiment, two plating layers are formed over a surface of each of the first base electrode layer and the second base electrode layer. Specifically, a Ni plating layer is formed on the first base electrode layer and the second base electrode layer, and a Sn plating layer is formed on the Ni plating layer. The Ni plating layer and the Sn plating layer are sequentially formed by barrel plating, for example.

In the above-described manner, the multilayer ceramic capacitor 10 according to the embodiment illustrated in FIG. 1 is manufactured.

It should be noted that the present invention is not limited to the embodiments disclosed above.

In other words, various modifications can be made to the above-described embodiments in terms of the mechanism, the shape, the material, the quantity, the position, the arrangement, and the like without departing from the technical idea and the object of the present invention, and these modifications are encompassed in the scope of the present invention.

### EXPLANATION OF REFERENCE NUMERALS

- 10: Multilayer ceramic capacitor
- 12: Multilayer body
- 12a: First main surface
- 12b: Second main surface
- 12c: First side surface
- 12d: Second side surface
- 12e: First end face
- 12f: Second end surface
- 14: Dielectric layer
- 14C: Central portion-region
- 14E: End portion-region
- 15a: Inner layer portion
- 15b1: First outer layer portion
- 15b2: Second outer layer portion
- 16: Internal electrode layer
- 16a: First internal electrode layer
- 16b: Second internal electrode layer
- 16c: Floating internal electrode layer
- 18a: First counter electrode portion
- 18b: Second counter electrode portion
- 20a: First extension electrode portion
- 20b: Second extension electrode portion
- 21a, 21b: Non-straight portion
- 22a: Side portion
- 22b: End portion
- 26c: Counter electrode portion
- 30: External electrode
- 30a: First external electrode
- 30b: Second external electrode
- 32: Base electrode layer
- 32a: First base electrode layer
- 32b: Second base electrode layer
- 34: Plating layer
- 34a: First plating layer
- 34b: Second plating layer
- 120: Base body
- 120c, 120d: Side surface
- 140: Dielectric particle
- 141: Core portion
- 142: Shell portion
- 160: Internal electrode pattern
- 161: Pattern end portion
- 220: Side margin
- 221: Interior

## Claims

1. A multilayer ceramic capacitor, comprising:
a multilayer body including a plurality of dielectric layers that are laminated, the multilayer body having a first main surface and a second main surface opposed to each other in a lamination direction of the plurality of dielectric layers, a first side surface and a second side surface opposed to each other in a width direction orthogonal to the lamination direction, and a first end surface and a second end surface opposed to each other in a length direction orthogonal to the lamination direction and the width direction;
first internal electrode layers respectively disposed on the plurality of dielectric layers and exposed at the first end surface;
second internal electrode layers respectively disposed on the plurality of dielectric layers and exposed at the second end surface;
a first external electrode disposed on the first end surface; and
a second external electrode disposed on the second end surface, wherein
the plurality of dielectric layers comprise a plurality of dielectric particles containing Ba and Ti,
the dielectric particles have a core-shell structure including a core portion and a shell portion surrounding the core portion,
cross-sectional areas of a plurality of the core portions of the dielectric particles viewed in the length direction of the multilayer body decrease in the width direction of the multilayer body toward each of the first side surface and the second side surface of the multilayer body, and
cross-sectional areas of a plurality of the shell portions of the dielectric particles viewed in the length direction of the multilayer body increase in the width direction of the multilayer body toward each of the first side surface and the second side surface of the multilayer body.

2. The multilayer ceramic capacitor according to claim 1, wherein
the plurality of dielectric layers include a central portion-region in a central portion in the width direction of the multilayer body and end portion-regions in end portions in the width direction of the multilayer body, and
the central portion-region has a larger dimension in the lamination direction than the end portion-regions.

3. The multilayer ceramic capacitor according to claim 1 or 2, wherein
the shell portion contains a metal, and
the metal contained in the shell portion includes at least Dy and includes a transition metal.
